# EUROPÄISCHE PATENTSCHRIFT

(11) **EP 0 366 132 B1**
(45) Veröffentlichungstag und Bekanntmachung des Hinweises auf die Patenterteilung: **07.12.1994**
(21) Anmeldenummer: 89119881.4
(22) Anmeldetag: 26.10.1989
(51) Int. Cl.: G05G 1/10, B60R 16/02

(54) **Multifunktions-Bedieneinrichtung**
Multifunction operating apparatus
Dispositif de commande multifunctions

(30) Priorität: 27.10.1988 DE 3836555
(43) Veröffentlichungstag der Anmeldung: 02.05.1990
(73) Patentinhaber: Bayerische Motoren Werke Aktiengesellschaft, 80788 München (DE)
(72) Erfinder: Künzner, Hermann, D-8000 München 81 (DE)
(74) Vertreter: Bullwein, Fritz

(56) Entgegenhaltungen:
- DE-A- 3 231 833
- DE-A- 3 317 595
- DE-A- 3 702 539
- DE-B- 1 690 518

## Beschreibung

Die Erfindung bezieht sich auf eine Multifunktions-Bedieneinrichtung nach dem Oberbegriff des Patentanspruchs 1.

Bei einer derartigen Einrichtung, wie sie aus der DE 31 04 668 A1 bekannt ist, sind mehrere Drehschalter für die Auswahl der Funktionsgruppen und die Auswahl einzelner Funktionen, die sog. Bedienung, sowie für die Eingabe von Datensätzen vorgesehen. Weitere Angaben über den Aufbau und die Wirkungsweise der Drehschalter sind dieser Druckschrift jedoch nicht entnehmbar.

Konkret dargestellt in dieser Druckschrift sowie weiter bekannt sind Drucktasten und Sensortasten, mit denen ebenfalls die genannten Auswahlen vorgenommen werden können.

Ein detailliert beschriebenes Ausführungsbeispiel hierzu findet sich in der DE 35 14 438 C1.

Sämtlichen bekannten Möglichkeiten der Auswahl von Menus und Funktionen gemeinsam ist die nur sehr eingeschränkte Brauchbarkeit bei Kraftfahrzeugen. Ursache hierfür ist, daß die Auswahl aufgrund des Menuaufbaus der Funktionen ein mehrmaliges Betätigen von Bedienelementen erfordert.

Diese Bedienelemente sind in der Regel unterschiedlich und erfordern eine hohe Aufmerksamkeit. Daraus ergibt sich, daß die Auswahl der Funktionen beispielsweise nicht während der Fahrt möglich ist, da sie die volle Konzentration des Fahrzeugbenutzers erfordert.

Während dieser Auswahl muß er sich zwangsläufig vom Verkehrsgeschehen abwenden. Die Folge davon ist, daß die jeweils gewünschte Funktion in der Regel nicht zur Verfügung steht und auch nicht sofort wunschgemäß eingestellt werden kann. Die bekannten Bedieneinrichtungen können somit nicht als benutzerfreundlich bezeichnet werden.

Die eingeschränkte Benutzbarkeit der bekannten Bedieneinrichtungen führen auch zu nicht unerheblichen Akzeptanzproblemen nicht nur der Bedieneinrichtungen, sondern auch der gesamten durch sie angesteuerten Geräte. Bei diesen Geräten handelt es sich beispielsweise um eine Klimaanlage, ein Navigationsgerät, ein Autoradio, ein Autotelefon, eine Diebstahlsicherungsanlage, einen Bordrechner oder ein Diagnosegerät, um nur eine kleine Auswahl zu nennen. Dies ist umso bedauerlicher, als immer mehr derartige Geräte in modernen Kraftfahrzeugen zur Verfügung stehen.

Der Erfindung liegt die Aufgabe zugrunde, eine Bedieneinrichtung der eingangs genannten Art zu schaffen, die konstruktiv einfach ist und einen einfachen und jederzeit möglichen Zugriff auf die gewünschte Funktion bzw. das gewünschte Menü erlaubt.

Die Erfindung löst diese Aufgabe durch die kennzeichnenden Merkmale des Patentanspruchs 1.

Der Drehschalter stellt praktisch einen Inkrementalgeber dar. Mit seiner Hilfe ist es möglich, die gewünschte Funktionsgruppe auszuwählen, durch Betätigen der Enter-Funktion auf diese Funktionsgruppe umzuschalten und anschließend daran mit Hilfe desselben Drehschalters die gewünschte Funktion auszuwählen und nach Betätigen der Enter-Funktion einzustellen.

Der Drehschalter, der nur einen geringen Bauraum beansprucht, kann in günstiger Reichweite des Fahrzeugbenutzers angeordnet sein. Er kann "blind" ertastet und betätigt werden und erfordert somit keinerlei optische Hinwendung des Fahrzeugbenutzers. Durch die Bi-Direktionalität ist es möglich, jederzeit und auf schnellstem Wege die gewünschte Funktion bzw. Funktionsgruppe auszuwählen. Die vorhandenen Raststellungen ermöglichen eine treffsichere Auswahl und bieten Sicherheit vor einem unbeabsichtigten, beispielsweise durch äußere Einflüsse verursachten Verstellen des Drehschalters.

Es kann durchaus sinnvoll sein, dem Fahrzeugbenutzer eine Hilfe für die Auswahl der "richtigen" Funktionsgruppe bzw. Funktion zu geben. Dies kann mechanisch durch eine mit dem Einstellen der Raststellungen verbundenen Betätigungswiderstand oder aber auch akustisch durch eine entsprechende Sprachausgabe und/oder eine andere akustische Information erfolgen.

Besonders vorteilhaft ist es, eine optische Unterstützung zu geben. Hierzu können beispielsweise die Merkmale des Patentanspruchs 2 dienen durch die die jeweiligen Auswahl-Möglichkeiten besonders eindrucksvoll und die der Raststellung zugeordnete Funktionsgruppe bzw. Funktion zusätzlich deutlich erkennbar wird. Dabei kann durch eine geeignete graphische Gestaltung die Wirkung der optischen Anzeige betont werden.

Hierzu zählt beispielsweise die Anordnung der den Rastellungen zugehörigen Bezeichnungen, Symbole oder dgl. für die verschiedenen Funktionsgruppen bzw. Funktionen in einem Kreis. Weiter zu nennen ist die Einspiegelung der Anzeigen über die Windschutzscheibe in das Sichtfeld des Fahrers. Dabei wird somit die optische Anzeige auch während des Fahrbetriebs erkennbar und eine Kontrolle der ausgewählten oder eingestellten Funktionsgruppe bzw. Funktion ermöglicht.

Eine Verbesserung der optischen Hilfe wird dadurch erzielt, daß die ausgewählte und/oder (mit Hilfe der Enter-Funktion) eingestellte Funktionsgruppe bzw. Funktion optisch deutlich herausgestellt wird. Dies kann beispielsweise durch Hell- oder Dunkeltastung der zugehörigen Beschriftung bzw. des zugehörigen Symbols oder durch eine irgendwie geartete andere optische Markierung erfolgen. Zur besseren Kennzeichnung kann dabei die optische Unterstreichung vor und nach Auslösen der Enter-Funktion unterschiedlich sein. Damit wird es ohne weiteres erkennbar, ob für die jeweilige Funktion bzw. Funktionsgruppe noch die Auslösung der Enter-Funktion erforderlich ist.

Von besonderem Vorteil ist der erfindungsgemäße Drehschalter dann, wenn es darum geht, einen alphanumerischen Datensatz einzugeben. Derartiges kann im Zusammenhang mit der Eingabe einer Telefonnummer, einer gesuchten Straße (für ein Fahrzeugleitsystem) oder aber auch in Verbindung mit einem Verkehrsfunkmodul erfolgen, bei dem die unter einem wählbaren Stichwort vorhandenen Verkehrsfunkinformationen abrufbar sind. Bei vorhandener optischer Unterstützung kann dabei die Auswahl der möglichen Zahlen oder Buchstaben angezeigt werden.

In diesem Zusammenhang besonders vorteilhaft kann es sein, einen zusätzlichen Speicher vorzusehen, in dem die möglichen Datensätze enthalten sind. Für ein Fahrzeugleitsystem können beispielsweise die gespeicherten Straßennamen hinterlegt sein. Für die Eingabe des gewünschten Straßennamens kann nun die optische Hilfe so gestaltet sein, daß während der Eingabe der einzelnen Buchstaben des Straßennamens vor jedem nächsten Buchstaben nur die Buchstaben optisch herausgestellt werden, die zu einem im Speicher hinterlegten Straßennamen gehören. Damit wird nicht nur die Eingabe des Straßennamens beschleunigt, sondern es wird auch erreicht, daß nur im Speicher vorhandene Straßennamen eingegeben werden können. Der Fahrzeugbenutzer hat somit die Sicherheit, daß der von ihm eingegebene Straßennamen auch tatsächlich im Speicher vorhanden ist.

Trotz der deutlich vereinfachten Bedienung kann es vorkommen, daß eine über die Enter-Funktion eingestellte Funktion bzw. Funktionsgruppe versehentlich gewählt ist. In diesem Fall kann es notwendig werden, eine Korrekturmöglichkeit zu besitzen. In der eingangs zitierten DE 31 04 668 A1 ist diese Möglichkeit bereits im Prinzip angesprochen. Jedoch ist dort keinerlei weitere Information hierzu enthalten.

Bei der Erfindung läßt sich eine Korrekturmöglichkeit auf besonders vorteilhafte Weise mit Hilfe der Enter-Funktion realisieren. Hierzu ist lediglich eine der Raststellungen mit der zugehörigen Auswahl "Korrekturfunktion" zu versehen. Wird diese Raststellung eingestellt und die Enter-Funktion betätigt, so wird damit die letzte Eingabe annulliert. Damit wird es möglich, statt der gewählten Funktion oder Funktionsgruppe eine dafür gewünschte auszuwählen und über die Enter-Funktion erneut einzugeben. Alternativ kann die Korrekturfunktion auch mit Hilfe des Drehschalters selbst ausgelöst werden. Ist für die Enter-Funktion beispielsweise vorgesehen, die axiale Bewegung in der einen Richtung, beispielsweise auf den Schaltersockel zu vorzunehmen, so kann die Korrekturmöglichkeit ebenfalls durch eine axiale Bewegung des Drehschalters in entgegengesetzter Richtung ausgelöst werden.

In der Zeichnung ist ein Ausführungsbeispiel der Erfindung dargestellt. Es zeigt:
- Fig. 1: den prinzipiellen Aufbau des wesentlichen Elements einer erfindungsgemäßen Multifunktions-Bedieneinrichtung in Form eines inkrementalen Drehschalters
- Fig. 2: schematisch eine zugeordnete Bildschirm-Anzeige
- Fig. 3: eine weitere Bildschirmanzeige
- Fig. 4: eine Bildschirmanzeige im Zusammenhang mit der Eingabe eines Wortes und

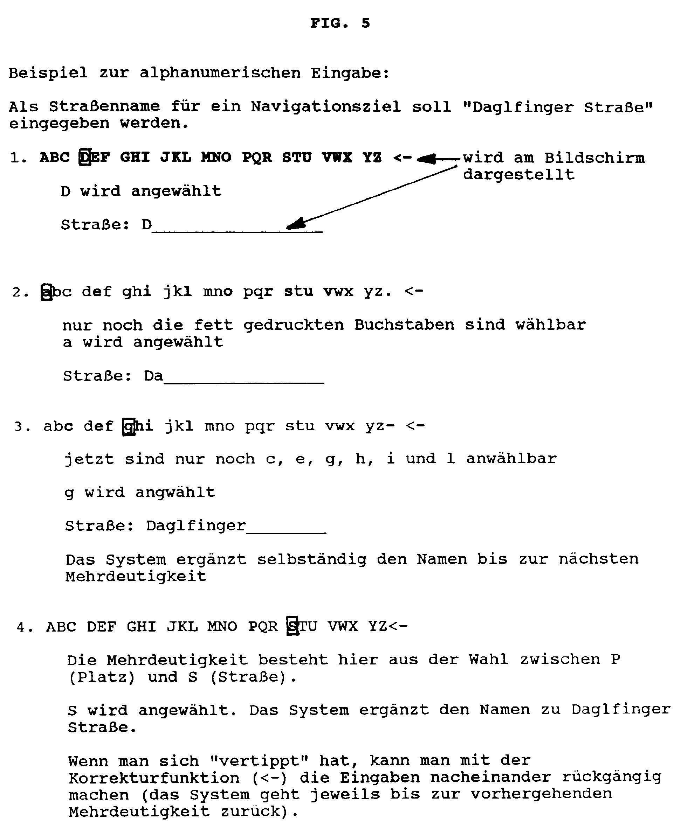

- Fig. 5: den Ablauf einer rechnerunterstützten Wort-Eingabe.

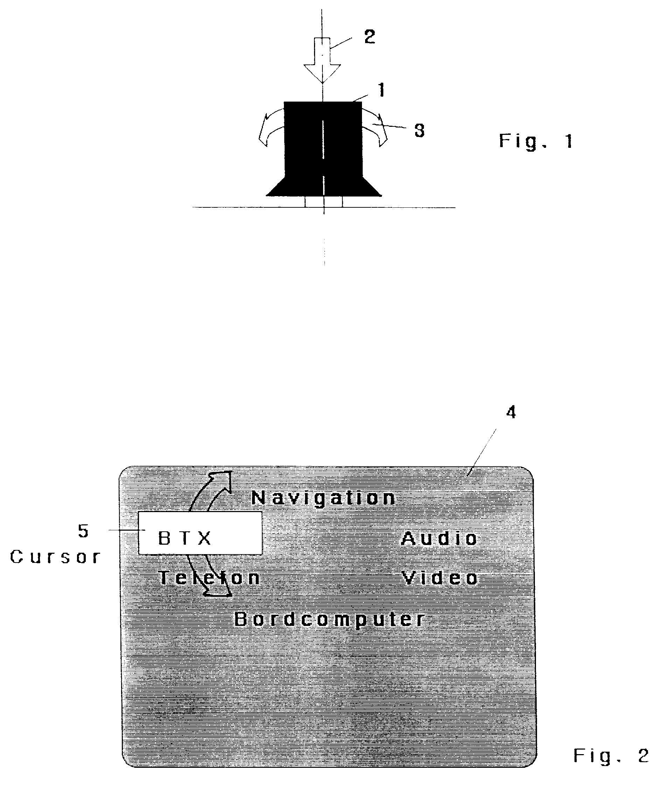

Die erfindungsgemäße Multifunktions-Bedieneinrichtung enthält als zentrales Element einen Drehschalter 1, der in Fig. 1 geschnitten und von der Seite dargestellt ist. Der Drehschalter 1 ist um seine Drehachse drehbar und ferner in axialer Richtung - angedeutet durch einen Pfeil 2 - gegen eine Feder beweglich.

Der Drehschalter 1 besitzt ferner für definierte Drehwinkel Raststellungen, in denen er gehalten ist und aus denen er gegen einen zugehörigen Rastwiderstand um eine Raststellung weiter verdrehbar ist. Diese Verdrehbarkeit kann bi-direktional - angedeutet durch ein Symbol 3 - erfolgen.

Mit Hilfe des Drehschalters 1 ist es möglich, zu verschiedenen Funktionsgruppen (Menus) geordnete Funktionen für eine entsprechende Einrichtung eines Kraftfahrzeugs auszuwählen. Bei diesen Einrichtungen kann es sich, wie bereits genannt, um ein Navigationssystem, eine Heiz-/Klimasteuerung, ein Autotelefon, ein Autoradio, einen Fernseher, einen Bordcomputer oder eine sonstige Einrichtung für verschiedene Bedien-, Anzeige- oder Wiedergabefunktionen handeln.

Zum Einstellen der gewünschten Funktion ist es zunächst erforderlich, das zugehörige Menu auszuwählen. Hierzu ist in einem eingestellten Auswahlmodus auf einem zugehörigen Bildschirm 4, wie in Fig. 2 dargestellt, die Bezeichnung oder ein sonstiges Symbol der vorhandenen Funktionsgruppen angezeigt. Die der eingestellten Raststellung des Drehschalters 1 zugehörige Funktionsgruppe ist dabei optisch hervorgehoben. Dies kann durch Hell- oder Dunkeltastung, durch Einrahmung oder auf sonstige optische Weise erfolgen. In der Figur ist diese Herausstellung durch einen Rahmen 5 symbolisiert. Durch Aufsuchen der nächsten Raststellung des Drehschalters 1 in beiden Richtungen wird dadurch von der bisher ausgewählten Funktionsgruppe, hier Bildschirmtext (BTX) auf ein Fahrzeugleitsystem ("Navigation") oder den Bordcomputer umgeschaltet.

Zur Auswahl der Funktionsgruppe ist es nunmehr erforderlich, den Drehschalter 1 in axialer Richtung, in Fig. 1 in Richtung des Pfeilsymbols 2 kurzzeitig zu drücken. Damit wird die ausgewählte Funktionsgruppe eingestellt. Auf der Bildschirm-Anzeige 4 erscheint nunmehr die der jeweiligen Funktionsgruppe zugeordneten einzelnen Funktionen.

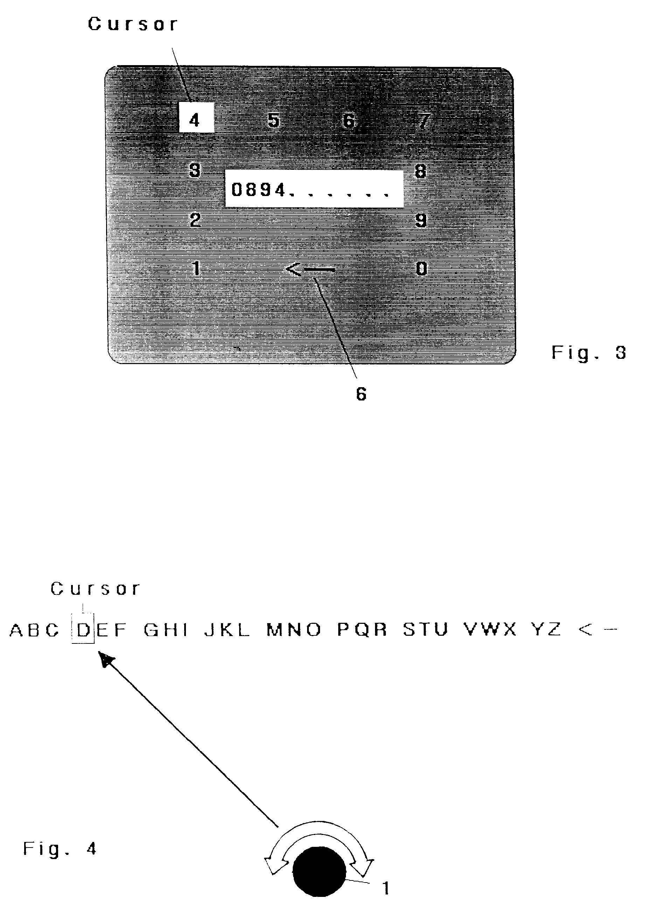

Dies ist vereinfacht in Fig. 3 gezeigt. Dabei soll die ausgewählte Funktionsgruppe eine Autotelefon-Einrichtung sein. Auf dem Bildschirm 4 erscheinen dann etwa kreisförmig angeordnet die zehn Ziffern sowie ein Zusatzfeld 6, dessen Funktion weiter unten erläutert wird.

Von den zehn Ziffern ist jeweils die Ziffer optisch hervorgehoben, die der eingestellten Raststellung des Drehschalters 1 zugeordnet ist. Im vorliegenden Fall ist dies die Zahl 4. Zum Wählen der gewünschten Telefonnummer ist es nunmehr erforderlich, der Reihe nach die Ziffern 0 bis 9 auszuwählen und durch Auslösen der Enter-Funktion einzustellen. Die Enter-Funktion wird durch die beschriebene Axialbewegung des Drehschalters 1 ausgelöst. In Fig. 3 gezeigt ist die Einstellung einer Telefonnummer, die mit der Ziffernfolge 0894 beginnt. Dabei ist 4, wie beschrieben, in der Weise eingestellt, daß zunächst die der Zahl 4 zugeordnete Raststellung des Drehschalters 1 ausgewählt wird und die Enter-Funktion betätigt wird. Anschließend daran wird der Drehschalter in die Raststellung gebracht, die der nächsten gewünschten Zahl zugeordnet ist.

Stellt sich nunmehr heraus, daß die eingestellte Zahl nicht gewünscht ist, ist es nunmehr möglich, mit Hilfe des Zusatzfeldes 6 die zuletzt eingestellte Zahl zu annullieren. Hierzu ist der Drehschalter in die Raststellung zu bringen, die dem Zusatzfeld 6 entspricht und anschließend daran die Enter-Funktion auszulösen. Damit wird die zuletzt eingestellte Zahl, hier die Zahl 4, annulliert. Anschließend daran kann die nach der Zahl 9 folgende nächste Zahl in der gewünschten Weise ausgewählt und durch Betätigen der Enter-Funktion eingestellt werden.

Zum Umschalten von der Funktion "Autotelefon", die anhand von Fig. 3 erläutert ist, auf ein anderes Menu sind verschiedene Möglichkeiten vorgesehen. So ist es beispielsweise möglich, durch mehrmaliges Betätigen der Enter-Funktion bei einer Raststellung des Drehschalters 1, in der das Zusatzfeld 6 eingestellt ist, die eingestellte Ziffernfolge vollständig zu annullieren. Nach der hier annullierten letzten Zahl, hier der Zahl "0", wird nun durch nochmaliges Auslösen der Enter-Funktion wieder das Übersichtsbild von Fig. 2 gezeigt und eine andere Funktionsgruppe in der beschriebenen Weise ausgewählt.

Es ist aber auch möglich, den Rücksprung in das Übersichts-Menu von Fig. 2 direkt, z. B. mit Hilfe eines weiteren Zusatzfeldes von Fig. 3 analog dem Zusatzfeld 6 (nicht dargestellt) oder durch Halten der Enter-Funktion über eine längere Zeitspanne auszuwählen.

Mit Hilfe des Drehschalters 1 ist es auch möglich, ein Wort, d. h. eine Buchstabenfolge oder eine Wortkombination einzugeben. Dies ist beispielweise im Rahmen eines Navigationssystems von Bedeutung, bei dem es darum geht, den Ausgangspunkt und/oder Endpunkt einer Fahrtroute zu definieren. In diesem Fall kann durch Auswahl der Funktionsgruppe "Navigation" und Betätigen der Enter-Funktion eine Anzeige im Bildschirm 4 eingestellt werden, die das Alphabet umfaßt. Die Raststellungen des Drehschalters 1 entsprechen dabei den einzelnen Buchstaben. Wie in Fig. 4 gezeigt, entspricht die hier beispielsweise dargestellte Raststellung dem Buchstaben "d", der wie erläutert, optisch hervorgehoben ist. Er kann durch Betätigen der Enter-Funktion eingestellt werden. Wie in den vorangegangenen Figuren kann dabei zwischen den ausgewählten und dem eingestellten Buchstaben "d" durch unterschiedliche optische Hervorhebung unterschieden werden. Der Bediener kann damit erkennen, ob er den Buchstaben "d" eingestellt hat oder ob beispielsweise sein Einstellwunsch nicht angenommen wurde.

Mit Hilfe des Drehschalters 1 ist es somit möglich, auch eine Buchstabenfolge einzugeben.

Gerade in Verbindung mit der Eingabe von Buchstabenfolgen ist eine Weiterbildung der Erfindung besonders sinnvoll. Dabei sind in einem zugeordneten, nicht dargestellten Speicher die möglichen Buchstabenfolgen hinterlegt. Möglich sind dabei die Buchstabenfolgen, die in irgendeiner Weise im System dokumentiert sind. Konkret bedeutet dies im Falle eines Navigationssystems, daß im Speicher die Straßen- oder Städtenamen der vorhandenen Stadtpläne oder Landkarten enthalten sind.

Zur Eingabe eines gewünschten Straßennamens, hier der "Daglfinger Straße" wird zunächst der Buchstabe "d" ausgewählt und mit der Enter-Funktion eingestellt. Auf dem Bildschirm werden nun die Buchstaben optisch hervorgehoben, die an zweiter Stelle bei den für den Anfangsbuchstaben "d" gespeicherten Straßennamen insgesamt vorhanden sind. Es handelt sich beispielsweise hier um die Buchstaben "a", "e", "i", "o", "r" und "u". Hier wird nun mit dem Buchstaben "a" ausgewählt und mit Hilfe der Enter-Funktion eingestellt.

Unmittelbar danach erscheinen die Buchstaben, die bei den beiden Anfangsbuchstaben "d" und "a" an dritter Stelle möglich sind. Es handelt sich hier um die Buchstaben "c", "e", "g", "h", "i" und "l".

Wird nunmehr der Buchstabe "g" ausgewählt und eingestellt, so ergänzt das System selbständig den Namen bis zur nächsten Mehrdeutigkeit. Es erscheint somit bereits das Wort "Daglfinger". Die Buchstaben "P" (für Platz) und "S" (für Straße) werden optisch herausgetastet. Wird nun "S" angewählt, so ergänzt das System den Namen selbständig zu "Daglfinger Straße".

Sofern eine Eingabe fehlerhaft ist, kann mit Hilfe einer Korrekturfunktion - wie anhand von Fig. 3 beschrieben - die Eingabe nacheinander rückgängig gemacht werden.

Entsprechend können Zahlen - für Geschwindigkeitslimits, Entfernungen und dgl. - ebenfalls mit Hilfe des Drehschalters eingegeben werden. Je nach Anwendungsfall und Zweckmäßigkeit kann in festen Inkrementen von beispielsweise 10 Einheiten hoch- bzw. heruntergezählt werden oder aber auch die einzelnen Stellen von Zahlen inkremental um beispielsweise eine Einheit geändert werden. Auswahl und Einstellen der gewünschten Zahl erfolgt wie beschrieben.

Auf diese Weise ist es möglich, mit Hilfe lediglich eines einzigen Drehschalters die verschiedenen Funktionen auszuwählen und einzustellen und auch innerhalb der jeweiligen Funktion die erforderlichen Eingaben vorzunehmen. Der gesamte Einstell-, Auswahl- und Änderungsvorgang ist ohne optische Hinwendung zum Drehschalter möglich. Seine Raststellungen sorgen für eine exakte taktile Steuerung des gesamten Vorgangs. Gegebenenfalls können, wie erläutert, optische Hilfen verwendet werden.

## Patentansprüche

1. Multifunktions-Bedieneinrichtung für Kraftfahrzeuge, bei der die Auswahl von Funktionsgruppen (Menus) und die Auswahl individueller Funktionen mittels Drehschaltern erfolgt und bei der eine Enter-Funktion auslösbar ist,
dadurch gekennzeichnet, daß ein und derselbe bi-direktionale Drehschalter (1) zur Menu-Auswahl und individuellen Funktionsauswahl dient, daß der Drehschalter (1) Raststellungen besitzt, daß den Raststellungen Menus oder einzelne Funktionen zugeordnet sind und daß die Enter-Funktion durch eine Axialbewegung des Drehschalters (1) auslösbar ist.

2. Bedieneinrichtung nach Anspruch 1,
dadurch gekennzeichnet, daß die Zahl der Raststellungen auf die Zahl der Menus und/oder der Funktionen abgestimmt ist.

3. Bedieneinrichtung nach Anspruch 1 oder 2,
dadurch gekennzeichnet, daß den Menus und/oder den Funktionen individuelle Anzeigen auf einem Bildschirm (4) zugeordnet sind und daß die Anzeige für die den Raststellungen des Drehschalters (1) zugeordneten Menus bzw. einzelnen Funktionen optisch herausgestellt ist.

4. Bedieneinrichtung nach Anspruch 3,
dadurch gekennzeichnet, daß die Anzeige für die den Raststellungen des Drehschalters zugeordneten Menus bzw. einzelnen Funktionen nach Auslösen der Enter-Funktion optisch herausgestellt ist.

5. Bedieneinrichtung nach Anspruch 3 und 4,
dadurch gekennzeichnet, daß sich die Anzeigen der den Raststellungen des Drehschalters zugeordneten Menus bzw. einzelnen Funktionen vor und nach Auslösen der Enter-Funktion unterscheiden.

6. Bedieneinrichtung nach einem der Ansprüche 1 bis 5,
dadurch gekennzeichnet, daß eine Funktion als Eingabefunktion für einen Datensatz von nacheinander eingebbaren alphanumerischen Angaben besteht.

7. Bedieneirnichtung nach Anspruch 6,
dadurch gekennzeichnet, daß dem Datensatz ein Speicher zugeordnet ist, der die insgesamt möglichen und/oder die nicht möglichen Datensätze enthält und daß abhängig vom eingegebenen Teil des Datensatzes die der nächst möglichen und/oder nicht möglichen Angabe zugeordneten Anzeigen optisch unterscheidbar dargestellt sind.

8. Bedieneinrichtung nach einem der Ansprüche 1 bis 7 mit einer Korrekturmöglichkeit des eingegebenen Menus und/oder Funktion,
dadurch gekennzeichnet, daß die Korrektur mittels der Enter-Funktion bei einer Raststellung (6) des Drehschalters durchführbar ist, die einer Korrekturfunktion zugeordnet ist.

## Claims

1. A multi-function operating device for motor vehicles, wherein groups of functions (menus) and individual functions are selectable by means of rotary switches and an enter-function is triggerable, characterised in that a single bidirectional rotary switch (1) is used for selection of menus and selection of individual functions; that the rotary switch (1) has stop positions; that the menus or individual functions are associated with the stop positions; and that the enter-function can be triggered by axial motion of the rotary switch (1).

2. An operating device according to claim 1, characterised in that the number of stop positions corresponds to or is adjusted to the number of menus and/or functions.

3. An operating device according to claim 1 or 2, characterised in that the menus and/or functions are associated with individual displays on a screen (4), and the display for the menus or individual functions associated with the stop positions of the rotary switch (1) is optically emphasised.

4. An operating device according to claim 3, characterised in that the display for the menus or individual functions associated with the stop positions of the rotary switch is optically emphasised after triggering the enter-function.

5. An operating device according to claims 3 and 4, characterised in that the displays of the menus or individual functions associated with the stop positions of the rotary switch are different before and after triggering the enter-function.

6. An operating device according to any of claims 1 to 5, characterised in that one function is an input function for a set of successively-inputtable alphanumeric data.

7. An operating device according to claim 6, characterised in that the set of data is assigned to a store which contains all the possible and/or impossible data sets and, depending on the input part of the data set, the displays associated with the nearest possible and/or impossible item are shown in an optically-distinguishable manner.

8. An operating device according to any one of claims 1 to 7 comprising a facility for correcting the input menu and/or function, characterised in that the correction is made through the enter-function at a stop position (6) of the rotary switch associated with the corrective function.

## Revendications

1. Dispositif de commande multifonctions pour véhicule automobile, permettant de sélectionner des groupes de fonctions (menus) et des fonctions individuelles à l'aide de boutons tournants et d'une fonction d'entrée, installation caractérisée en ce qu'un seul et même bouton tournant (1), bidirectionnel, sert à la sélection du menu et la sélection des fonctions individuelles, ce bouton tournant (1) ayant les positions d'encliquetage auxquelles sont associés des menus et des fonctions distinctes, et la fonction d'entrée est déclenchée par un mouvement axial du bouton tournant (1).

2. Dispositif de commande selon la revendication 1, caractérisé en ce que le nombre des positions d'encliquetage est défini suivant le nombre des menus et/ou des fonctions.

3. Dispositif de commande selon la revendication 1 ou 2, caractérisé en ce qu'aux menus et/ou aux fonctions, sont associés des affichages individuels sur l'écran-image (4) et l'affichage des menus, ou différentes fonctions associées aux positions d'encliquetage du bouton tournant (1) sont mises en évidence de manière optique.

4. Dispositif de commande selon la revendication 3, caractérisé en ce que l'affichage des menus ou des différentes fonctions associées aux positions d'encliquetage du bouton tournant, sont mises en évidence optiquement par déclenchement de la fonction d'entrée.

5. Dispositif de commande selon les revendications 3 et 4, caractérisé en ce que les affichages des menus ou des différentes fonctions associées aux positions d'encliquetage du bouton tournant, sont différentes avant et après le déclenchement de la fonction d'entrée.

6. Dispositif de commande selon l'une des revendications 1 à 5, caractérisé en ce qu'une fonction est une fonction d'entrée pour un jeu de données d'indications alphanumériques destinées à être entrées successivement.

7. Dispositif de commande selon la revendication 6, caractérisé en ce qu'une mémoire est associée au jeu de données, mémoire qui contient tous les jeux de données globalement possibles et/ou ceux qui ne sont pas possibles, et en ce qu'en fonction de la partie introduite du jeu de données, les affichages associés aux indications suivantes possibles et/ou non possibles sont représentés de manières optiquement différentes.

8. Dispositif de commande selon l'une des revendications 1 à 7 avec une possibilité de correction du menu et/ou de la fonction introduite, dispositif caractérisé en ce que la correction se fait à l'aide de la fonction d'entrée pour une position d'encliquetage (6) du bouton tournant, position à laquelle est associée une fonction de correction.
